# EUROPÄISCHE PATENTSCHRIFT

(11) **EP 3 275 395 B1**
(45) Veröffentlichungstag und Bekanntmachung des Hinweises auf die Patenterteilung: **08.01.2020**
(21) Anmeldenummer: 17001044.1
(22) Anmeldetag: 21.06.2017
(51) Int. Cl.: A61C 8/00

(54) **DENTALSCHRAUBIMPLANTAT MIT AXIAL VON KNOCHEN DURCHSETZBAREM ANSATZ**
SCREW-IN DENTAL IMPLANT WITH ATTACHMENT WHICH CAN BE APPLIED AXIALLY TO THE BONE
IMPLANT DE VIS DENTAIRE AYANT UNE APPROCHE AXIALE APPLICABLE PAR DES OS

(30) Priorität: 27.07.2016 DE 102016009150
(43) Veröffentlichungstag der Anmeldung: 31.01.2018
(73) Patentinhaber: Scherer, Johannes, 86438 Kissing (DE)
(72) Erfinder: Scherer, Johannes, 86438 Kissing (DE)
(74) Vertreter: Wiedemann, Markus

(56) Entgegenhaltungen:
- EP-A1- 0 437 031
- JP-A- 2011 104 222
- US-A1- 2005 164 146

## Beschreibung

Die Erfindung geht aus von einem Dentalschraubimplantat zum Einschrauben in einen Kieferknochen gemäß dem Oberbegriff von Anspruch 1.

Dentalimplantate werden anstelle von fehlenden und/oder extrahierten natürlichen Zähnen eingesetzt, oder als Unterstützungsfläche für eine Brücke und endgültige Prothese verwendet, um die normalen oralen Funktionen wiederherzustellen.

Während Dentalschraubimplantate axial durch Einschrauben oder Einschlagen inseriert werden, werden hiervon abweichende Disk- oder Scheibenimplantate, welche hier nicht Gegenstand der Diskussion und beispielsweise in WO 2011/003373 A1 beschrieben sind, von der Seite basal in ein durch Fräsen im Kieferknochen hergestelltes, T-förmig ausgebildetes Implantatbett eingesetzt.

Die Befestigung eines Dentalschraubimplantats im Kieferknochen erfolgt in der Regel mit krestaler Insertionstechnik von runden zylinderförmigen Schraubimplantaten. Bei der Implantation von dentalen Schraubimplantaten ist der Zahnarzt aber häufig mit einem ungenügenden Knochenangebot in vertikaler Richtung, d.h. in Richtung der Längsachse des Schraubimplantats konfrontiert. Herkömmliche Schraubimplantate benötigen aber zum Herstellen einer hinreichenden Verbindung mit dem Knochen eine gewisse Mindestlänge. Würde man zum Ausgleich einer kürzeren Länge des Schraubimplantats den Durchmesser des Schraubimplantats erhöhen, so würde dies in einer Schwächung des krestalen Knochens resultieren. Der krestale Knochen ist aber für die Unterstützung des Weichgewebes elementar. Dies würde aber eine Augmentation notwendig machen, d.h. einen Knochenaufbau, der entweder mithilfe von künstlichem Ersatzmaterial oder aus körpereigenem Knochen erfolgt.

Bei der Implantation nach Extraktion besteht außerdem aufgrund des relativ großen Durchmessers der Knochenwunde die Schwierigkeit, eine gewisse Primär-Stabilität zu erreichen. Eine Verwendung von größeren Durchmessern von Schraubimplantaten führt aber wiederum zu einem ungenügenden krestalen Knochenangebot. Deshalb werden Schraubimplantate in der Regel tiefer an den Rand der Extraktions-Alveole inseriert.

Die Entwicklung in der Implantologie brachte für krestal inserierte Dentalschraubimplantate Lösungen hervor, welche die Stabilität des Dentalschraubenimplantats erhöhen sollen. In einer langen Reihe von Entwicklungen sind nachfolgende Patent- bzw. Gebrauchsmusterschriften zu nennen:
DE 20 2006 012 830 U1 offenbart ein Kieferimplantat mit einem Kern und aus zumindest einem an den Kern radial angeformten Gewindegang, welcher als Schneckengang ausgebildet ist. Der Schneckengang weist axiale Durchgangslöcher auf, durch welche der Kieferknochen wachsen soll. Jedoch weisen diese Durchgangsbohrungen einen relativ geringen Durchmesser auf und erfordern weiterhin einen relativ großen Durchmesser des Schneckengangs.

In DE 10 2005 037 809 A1 wird ein Schraubenimplantat mit einem Schraubengewinde beschrieben, das eine radial äußere offene Span-Nut aufweist, die apikal in Längsrichtung verläuft.

In der DE 33 15 329 A1 ist ein Dentalschraubenimplantat beschrieben, bei welchem an den mit einem Schraubgewinde versehenen Implantatkörper axial eine in apikaler Richtung weisende Hülse angesetzt ist, welche mediale oder radiale Durchgangsbohrungen aufweist, zum Durch- und Einwachsen des Kieferknochens. Dadurch erhöht sich jedoch die Länge des Dentalschraubimplantats in axialer Richtung, was aus den oben genannten Gründen aber unerwünscht ist.

Ein gattungsgemäßes Dentalschraubenimplantat wird in US 2005/0164146 A1 beschrieben.

Der vorliegenden Erfindung liegt demgegenüber die Aufgabe zugrunde, ein Dentalschraubimplantat der eingangs erwähnten Art derart weiter zu entwickeln, dass es bei kompakten Abmessungen eine möglichst hohe Stabilität im in den Kieferknochen eingesetzten Zustand aufweist.

Diese Aufgabe wird erfindungsgemäß durch die Merkmale von Anspruch 1 gelöst.

### Offenbarung der Erfindung

Die Erfindung geht aus von einem Dentalschraubimplantat zum Einschrauben in einen Kieferknochen, welcher eine krestale Knochenlinie im Bereich seines knöchernen Alveolarkamms aufweist, mit einem Implantatkörper, welcher einen krestalen Anteil und einen intraossären Anteil aufweist, wobei der krestale Anteil zur Aufnahme einer Zahnprothetik ausgebildet ist, und der intraossäre Anteil mit einem Schraubgewinde oder Schlaggewinde zum Einsetzen in den Kieferknochen versehen ist.

Das Dentalschraubimplantat weist einen hülsenförmigen, vom Schraubgewinde oder Schlaggewinde abweichenden und gegenüber einem zentralen Kernimplantatkörper radial erweiterten (radialen) Ansatz des intraossären Anteils auf, wobei sich wenigstens der zentrale Kernimplantatkörper in Richtung einer Längsachse des Dentalschraubimplantats gesehen bis zu einem apikalen Ende des Dentalschraubimplantats erstreckt.

An einer radial äußeren Umfangsfläche des Ansatzes ist das Schraubgewinde oder Schlaggewinde ausgebildet oder angeordnet.

Der Ansatz ist mit wenigstens einer Durchgangsöffnung versehen, welche im Wesentlichen parallel zur Längsachse des Implantatkörpers verläuft und eine Verbindung zwischen einer zum krestalen Anteil weisenden oder koronalen Ringfläche des Ansatzes und einer vom krestalen Anteil wegweisenden oder apikalen Ringfläche des Ansatzes herstellt.

Alternativ oder zusätzlich ist der Ansatz mit wenigstens einer als Einwachsöffnung für den Kieferknochen vorgesehenen Sacklochöffnung oder Blindöffnung oder Blindbohrung versehen, welche im Wesentlichen parallel zur Längsachse des Implantatkörpers verläuft und in der zum krestalen Anteil weisenden oder koronalen Ringfläche des Ansatzes ausgebildet ist, wobei in einem bestimmungsgemäß in den Kieferknochen eingesetzten Zustand des Dentalschraubimplantats die zum krestalen Anteil weisende oder koronale Ringfläche des Ansatzes in Richtung der Längsachse des Implantatkörpers gesehen von der krestalen Knochenlinie apikal oder subkrestal beabstandet ist.

Anatomisch wird als krestale Knochenlinie der am weitesten koronal bzw. marginal gelegene Rand des periimplantären Knochengewebes bezeichnet. Die krestale Knochenlinie ist daher im Bereich des knöchernen Alveolarkamms des Kieferknochens angeordnet und bezeichnet eine Niveaulinie des Niveaus des Alveolarkamms. Sie stellt daher in Axialrichtung gesehen das höchste koronale Niveau des Kieferknochens dar. Folglich liegt die koronale Ringfläche des Ansatzes nach dem Einsetzen des Dentalschraubimplantats unterhalb der krestalen Knochenlinie, wenn diese als oben liegend bezeichnet wird.

Da gemäß eines ersten Aspekts der Erfindung der Ansatz des intraossären Anteils mit wenigstens einer als Einwachsöffnung für den Kieferknochen vorgesehenen Durchgangsöffnung versehen ist, welche im Wesentlichen parallel zur Längsachse des Implantatkörpers verläuft und eine Verbindung zwischen der zum krestalen Anteil weisenden oder koronalen Ringfläche des Ansatzes und der vom krestalen Anteil weg weisenden oder apikalen Ringfläche des Ansatzes herstellt, können nach dem bestimmungsgemäßen Einsetzen des Dentalschraubimplantats in den Kieferknochen in axialer Richtung gesehen der Kieferknochen sowohl von der koronalen Seite als auch von der apikalen Seite her in die wenigstens eine Durchgangsöffnung einwachsen und die eingewachsenen Knochenabschnitte dann auch miteinander verwachsen. Von der krestalen oder koronalen Seite her wächst der Kieferknochen zunächst vom Rand der zum Einsetzen des Dentalschraubimplantats gefertigten Bohrung radial und dann auch axial in die wenigstens eine Durchgangsöffnung ein. Dies sorgt für eine vorteilhaft hohe Primär-Stabilität des Dentalschraubimplantats im Kieferknochen.

Gemäß eines zweiten Aspekts der Erfindung ist der Ansatz des intraossären Anteils mit wenigstens einer als Einwachsöffnung für den Kieferknochen vorgesehenen Sacklochöffnung versehen, welche im Wesentlichen parallel zur Längsachse des Implantatkörpers verläuft und in der zum krestalen Anteil weisenden oder koronalen Ringfläche des Ansatzes ausgebildet ist. Unter einer Sacklochöffnung wird eine Öffnung verstanden, welche einen Boden aufweist und eben gerade keine Verbindung zwischen der zum krestalen Anteil weisenden oder koronalen Ringfläche des Ansatzes und der vom krestalen Anteil weg weisenden oder apikalen Ringfläche des Ansatzes herstellt.

Dieser zweite Aspekt der Erfindung beinhaltet zwei Fälle. Erstens, dass lediglich die zum krestalen Anteil weisende oder koronale Ringfläche des Ansatzes wenigstens eine Sacklochöffnung aufweist und die vom krestalen Anteil wegweisende oder apikale Ringfläche des Ansatzes keine Sacklochöffnung. Zweitens, dass die zum krestalen Anteil weisende oder koronale Ringfläche des Ansatzes wenigstens eine erste Sacklochöffnung und die vom krestalen Anteil wegweisende oder apikale Ringfläche des Ansatzes wenigstens eine zweite Sacklochöffnung aufweist.

Zusätzlich kann die zum krestalen Anteil weisende oder koronale Ringfläche des Ansatzes optional eine umlaufende, in Umfangsrichtung gesehen unterbrochene oder ununterbrochene Ringnut aufweisen. Auf eine solche Ringnut kann aber auch verzichtet werden.

Bei diesem zweiten Aspekt der Erfindung kann nach dem bestimmungsgemäßen Einsetzen des Dentalschraubimplantats in den Kieferknochen in axialer Richtung gesehen der Kieferknochen dann von der koronalen Seite und optional zusätzlich von der apikalen Seite her in die wenigstens eine erste oder zweite Sacklochöffnung einwachsen. Von der krestalen oder koronalen Seite her, falls wenigstens eine erste Sacklochöffnung in der zum krestalen Anteil weisenden oder koronalen Ringfläche des Ansatzes ausgebildet ist, wächst dann der Kieferknochen ebenfalls zunächst vom Rand der zum Einsetzen des Dentalschraubimplantats gefertigten Bohrung radial und dann auch axial in die wenigstens eine Durchgangsöffnung ein. Dies sorgt für ebenfalls eine vorteilhaft hohe Primär-Stabilität des Dentalschraubimplantats im Kieferknochen.

Unter einer Öffnung ist im Rahmen der Erfindung jeglicher Querschnitt in einer Richtung senkrecht zur Längsachse des Dentalschraubimplantats zu verstehen, wie beispielsweise ringförmig vollständig umlaufende Querschnitte, kreisrunde Querschnitte, teilkreisringförmige Querschnitte, runde Querschnitte, eckige Querschnitte usw.. Folglich weist bevorzugt die wenigstens eine Durchgangsöffnung und die wenigstens eine Sacklochöffnung in einer Richtung senkrecht zur Längsachse des Dentalschraubimplantats gesehen einen beliebigen Querschnitt auf, insbesondere einen ringförmig vollständig umlaufenden Querschnitt, einen kreisrunden Querschnitt, einen teilkreisringförmigen Querschnitt, einen runden Querschnitt, einen eckigen Querschnitt.

Vorzugsweise sind die wenigstens eine Durchgangsöffnung und/oder die wenigstens eine Sacklochöffnung ausschließlich als Einwachsöffnung für den Kieferknochen vorgesehen bzw. ausgebildet, ohne dass diese Öffnungen noch eine weitere Funktion aufweisen. Mit anderen Worten besteht die Funktion dieser Öffnungen bevorzugt ausschließlich darin, dass in diese Kieferknochen einwachsen kann. Indes können alternativ diese Öffnungen auch multifunktional ausgebildet und beispielsweise zusätzlich zur Aufnahme von Befestigungs- oder Verankerungsmitteln vorgesehen sein.

Da das Dentalschraubimplantat bevorzugt durch einen in Bezug zur Längsachse rotationssymmetrischen Körper gebildet wird, stellt die Längsachse bevorzugt zugleich auch eine Mittelachse des Dentalschraubimplantats dar.

Daher stellt der radiale Ansatz in Bezug zum zentralen Kernimplantatkörper einen radial äußeren Ring- oder Hülsenkörper dar, welcher den zentralen Kernimplantatkörper ring-oder hülsenförmig umgibt und welcher die zum krestalen Anteil weisende oder koronale Ringfläche und die vom krestalen Anteil weg weisende oder apikale Ringfläche jeweils als Stirnflächen aufweist. Mit anderen Worten bildet im Bereich des intraössären Anteils der zentrale Kernimplantatkörper einen zentralen Kern aus, auf den der Ansatz radial außen ring- oder hülsenartig angesetzt ist. Auch in Bezug zu dem krestalen Anteil ist der radiale Ansatz des intraossären Anteils des Implantatkörpers im Durchmesser bevorzugt stufen- oder ringartig erweitert. Wenn dann sich wenigstens der zentrale Kernimplantatkörper in Richtung der Längsachse des Dentalschraubimplantats gesehen bis zu einem apikalen Ende des Dentalschraubimplantats erstreckt, so trägt dies zu einer geringen axialen Länge und damit kompakten Bauform des Dentalschraubimplantats bei gleichzeitig hoher Primär-Stabilität des Dentalschraubimplantats im Kieferknochen bei.

Unter dem apikalen Ende des Dentalschraubimplantats ist das Ende des Dentalschraubimplantats zu verstehen, welches im bestimmungsgemäß eingesetzten Zustand des Dentalschraubimplantats in Richtung der Zahnwurzeln weist.

Bevorzugt sind der zentrale Kernimplantatkörper und der Absatz einstückig ausgebildet. Alternativ könnten der zentrale Kernimplantatkörper und der Absatz auch jeweils durch separate, aber miteinander verbundene Körper gebildet werden.

Da bei beiden Aspekten der Erfindung gleichzeitig oder parallel dazu an einer äußeren Umfangsfläche des ringförmigen radialen Ansatzes das Schraubgewinde oder Schlaggewinde angeordnet ist, findet eine erste formschlüssige und radial äußere Festlegung des Dentalschraubimplantats im Kieferknochen durch das am Ansatz radial außen angeordnete Schraub- oder Schlaggewinde und eine zweite formschlüssige und radial innere Festlegung des Dentalschraubimplantats im Kieferknochen durch das Einwachsen (koronal und apikal) des Kieferknochens in die wenigstens eine Durchgangsöffnung oder in die wenigstens eine Sacklochöffnung in paralleler Weise und in etwa auch auf gleichem axialen Niveau des Dentalschraubenimplantats im intraossären Anteil statt.

Wegen dieser Parallelverankerung des Dentalschraubenimplantats im Kieferknochen kann das Dentalsschraubimplantat relativ kurz bauen, was die eingangs beschriebenen Probleme überwinden hilft.

Insgesamt wird daher ein Dentalschraubimplantat mit einem Implantatkörper vorgeschlagen, bestehend aus einem krestalem Anteil, der bevorzugt als Konus zur Aufnahme der Prothetik ausgebildet ist, sowie einem intraossärem Anteil. Durch die bevorzugte Ausbildung wenigstens eines axialen Abschnitts des krestalen Anteils als externer Konus kann der Implantatkörper bei gleicher mechanischer Stabilität im Durchmesser kleiner ausgeführt werden.

Der intraössare Anteil des Implantatkörpers weist einen ringförmigen Ansatz am basalen oder apikalen Ende auf. Dieser ist dadurch gekennzeichnet, dass er in der wenigstens einen axialen Durchgangsöffnung bzw. in der wenigstens einen axialen Sacklochöffnung eine vertikale Ein- bzw. Durchwachsung mit Knochen erlaubt. Dieser Ansatz beginnt erst mit einem gewissen Abstand von der krestalen Knochenlinie, um eine komplette Überwachsung mit Kieferknochen zu ermöglichen. Dadurch werden an der Durchtrittsstelle des Dentalschraubimplantats durch den Kieferknochen ein sehr kleiner Durchmesser des Dentalschraubimplantats und eine relativ hohe verbleibende und einwachsende Knochenmenge im Bereich des Dentalschraubimplantats erreicht.

Durch die in den Unteransprüchen aufgeführten Maßnahmen sind vorteilhafte Weiterbildungen und Verbesserungen der in den unabhängigen Ansprüchen angegebenen Erfindung möglich.

Vorzugsweise ist die vom krestalen Anteil weg weisende oder apikale Ringfläche des Ansatzes im Wesentlichen koplanar mit einer Bodenfläche des zentralen Kernimplantatkörpers.

Weiterhin kann sich der Ansatz in Richtung der Längsachse gesehen ebenfalls bis zu dem apikalen Ende des Dentalschraubimplantats erstrecken.

Bevorzugt ist die zum krestalen Anteil weisende Ringfläche des radialen ringförmigen Ansatzes von der krestalen Knochenlinie um 1 mm bis 3 mm apikal oder subkrestal beabstandet. Dann ist einerseits gewährleistet, dass der Kieferknochen von der krestalen Seite her in die wenigstens eine Durchgangsöffnung einwachsen kann. Andererseits ist dann die axiale Länge des Dentalschraubimplantats vorteilhaft gering.

Gemäß einer Weiterbildung kann der radiale ringförmige Ansatz einen hülsenförmigen Körper sowie wenigstens einen diesen hülsenförmigen Körper mit dem restlichen Implantatkörper verbindenden lateralen oder radialen Steg aufweisen. Eine Durchgangsöffnung wird dann zwischen zwei lateralen Stegen und dem hülsenförmigen Körper gebildet. Bevorzugt sind beispielsweise drei solcher am Umfang regelmäßig oder unregelmäßig verteilt angeordneter Stege und dann drei axiale Durchgangsöffnungen vorhanden. Generell kann das Dentalschraubenimplantat aber eine beliebige Anzahl von Stegen und Durchgangsöffnungen aufweisen.

Besonders bevorzugt erstreckt sich das Schraubgewinde oder Schlaggewinde in Richtung der Längsachse des Implantatkörpers gesehen über die gesamte Längserstreckung des radialen ringförmigen Ansatzes. Dann wird die zur Verfügung stehende axiale Länge des Ansatzes bestmöglich für die oben beschriebene Parallelverankerung im Kieferknochen genutzt.

Gemäß einer Weiterbildung besteht wenigstens der radiale Ansatz des Dentalschraubimplantats aus Titan-Spongosia. Weiterhin bevorzugt ist das Dentalschraubimplantat ein einstückiger Körper beispielsweise aus Titan-Spongosia.

Bevorzugt ist auch das Schraubgewinde oder Schlaggewinde selbstschneidend ausgeführt.

Weiterhin kann eine radial äußere Umfangsfläche des ringförmigen Ansatzes im Querschnitt gesehen einen konischen oder kegeligen Verlauf aufweisen, wobei sich der Durchmesser in apikaler Richtung reduziert. Dabei kann der Kegelwinkel beispielsweise etwa 5 Grad betragen.

Gemäß einer Fortbildung kann der krestale Anteil einen axialen Abschnitt aufweisen, dessen Außendurchmesser sich in koronaler Richtung konisch verjüngt. Da der krestale Anteil zur Aufnahme einer Zahnprothetik und insbesondere zur Aufnahme eines Abutments ausgebildet ist, kann der am Abutment befestigte Implantatkörper bei gleicher mechanischer Stabilität im Durchmesser relativ klein ausgeführt werden. Dies ist vor allem im Hinblick auf einen Zahnersatz für kleinere Zähne vorteilhaft. Insbesondere weist der krestale Anteil auch eine zentrale Sacklochbohrung mit Innengewinde zur Aufnahme eines Abutments auf.

Gemäß einer Weiterbildung kann die zum krestalen Anteil weisende oder koronale Ringfläche des Ansatzes eine umlaufende, ununterbrochene oder teilkreisweise ausgebildete Ringnut aufweisen. Teilkreisweise ausgebildete Ringnut bedeutet, dass die umlaufende Ringnut in Umfangsrichtung gesehen durch eine radiale Stege oder Zwischenwände unterbrochen ist. In die Ringnut kann dann ebenfalls Kieferknochen von der koronalen Seite her einwachsen und so die Verankerung des Dentalschraubimplantats im Kieferknochen weiter verbessern.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Identische bzw. gleich wirkende Bauteile und Baugruppen sind in unterschiedlichen Ausführungsformen jeweils mit denselben Bezugszahlen bezeichnet.

Nachstehend sind Ausführungsbeispiele der Erfindung in der Zeichnung dargestellt und in der nachfolgenden Beschreibung näher erläutert. In der Zeichnung zeigt
- Fig.1: eine Seitenansicht eines Dentalschraubenimplantats gemäß einer bevorzugten Ausführungsform der Erfindung;
- Fig.2: eine Längs-Querschnittsdarstellung des Dentalschraubenimplantats von Fig.1 in einem bestimmungsgemäß in einen Kieferknochen eingesetzten Zustand;
- Fig.3: eine Draufsicht des Dentalschraubenimplantats von Fig.1;
- Fig.4: eine Längs-Querschnittsdarstellung eines Dentalschraubenimplantats gemäß einer weiteren Ausführungsform;
- Fig.5: eine Längs-Querschnittsdarstellung eines Dentalschraubenimplantats gemäß einer weiteren Ausführungsform.

### Beschreibung der Ausführungsbeispiele

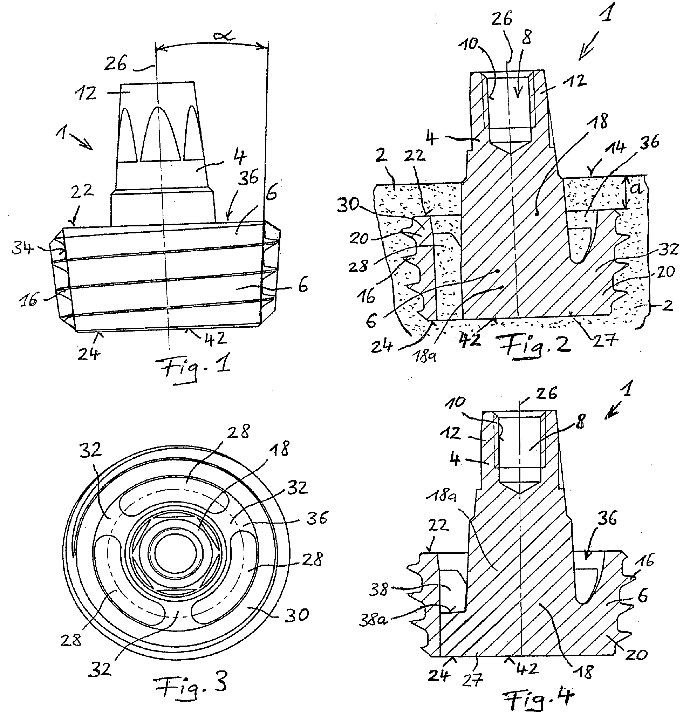

In den Figuren, insbesondere in **Fig.1** ist ein Dentalschraubimplantat 1 gemäß einer bevorzugten Ausführungsform der Erfindung in einem gemäß **Fig.2** in einen durch Punkte symbolisierten Kieferknochen 2 bestimmungsgemäß eingesetzten bzw. bereits eingewachsenen Zustand gezeigt. Ein solches Dentalschraubimplantat 1 wird in eine zuvor gefertigte Sacklochbohrung axial in den Kieferknochen 2 eingeschraubt bzw. eingeschlagen.

Generell weist das Dentalschraubenimplantat 1 einen Implantatkörper 18 mit einem krestalen Anteil 4 und einem intraossären Anteil 6 auf, wobei mit "intraossär" der Anteil 6 des Implantatkörpers 18 gemeint ist, welcher nach dem bestimmungsgemäßen Einsetzen des Dentalschraubenimplantats 1 in den Kieferknochen 2 innerhalb des Knochenmaterials des Kieferknochens 2 angeordnet bzw. nach einer gewissen Zeit in diesen eingewachsen ist. Mit anderen Worten ist der intraossäre Anteil 6 nach dem Einsetzen des Dentalschraubenimplantats 1 vollständig im Kieferknochen 2 versenkt angeordnet bzw. von diesem umgeben.

Der krestale Anteil 4 ragt dann aus dem Kieferknochen 2 heraus und ist zur Aufnahme einer hier nicht gezeigten Zahnprothetik ausgebildet, beispielsweise dadurch, dass in bekannter Weise ein hier nicht dargestelltes Abutment an dem krestalen Anteil 4 beispielsweise über eine Schraubverbindung befestigt wird, wozu hier beispielsweise der krestale Anteil 4 mit einer zentralen Sacklochbohrung 8 mit Innengewinde 10 versehen ist, in welcher das dann von außen auf den krestalen Anteil 4 aufgesetzte Abutment mittels einer Schraube befestigt wird. Weiterhin weist der krestale Anteil 4 hier einen axialen, koronalen Endabschnitt 12 auf, dessen Außendurchmesser sich in koronaler Richtung konisch verjüngt.

Von dem Kieferknochen 2 ist in **Fig.2** eine krestale Knochenlinie 14 angedeutet, welche den am weitesten koronal bzw. marginal gelegenen Rand des periimplantären Knochengewebes des Kieferknochens 2 bezeichnet. Die krestale Knochenlinie 14 ist daher im Bereich des knöchernen Alveolarkamms des Kieferknochens 2 angeordnet und bezeichnet eine Niveaulinie des Niveaus des Alveolarkamms. Sie stellt daher in Axialrichtung gesehen das höchste koronale Niveau des Kieferknochens 2 dar.

Der intraossäre Anteil 4 ist mit einem Schraubgewinde oder Schlaggewinde 16 zum Einschrauben oder Einschlagen in den Kieferknochen 2 versehen. Bevorzugt ist das Schraubgewinde oder Schlaggewinde 16 selbstschneidend ausgeführt.

Im Bereich des intraossären Anteils 6 des Implantatkörpers 18 ist ein ring- oder hülsenförmiger, vom Schraubgewinde oder Schlaggewinde 16 selbst abweichender und gegenüber einem zentralen Kernimplantatkörper 18a radial erweiterter Ansatz 20 vorgesehen. Mit anderen Worten stellt dieser radiale Ansatz 20 in Bezug zum (restlichen) zentralen Kernimplantatkörper 18 einen äußeren Ring- oder Hülsenkörper dar, welcher eine zum krestalen Anteil 4 weisende oder koronale Ringfläche 22 und eine vom krestalen Anteil 4 weg weisende oder apikale Ringfläche 24 jeweils als Stirnflächen aufweist. Mit anderen Worten bildet im Bereich des intraössären Anteils 6 der Implantatkörper 18 einen zentralen Kernimplantatkörper 18a aus, auf den radial außen der Ansatz 20 ring- oder hülsenartig angesetzt ist. Kernimplantatkörper 18a und Ansatz bilden dann bevorzugt zusammen den Implantatkörper 18, welcher dann einstückig oder auch mehrteilig ausgebildet sein kann.

Dabei erstreckt sich der zentrale Kernimplantatkörper 18a und hier bevorzugt auch der Ansatz 20 in Richtung einer Längsachse 26 des Dentalschraubimplantats 1 gesehen bis zu einem apikalen Ende 27 des Dentalschraubimplantats 1.

Auch in Bezug zum krestalen Anteil 4 des Implantatkörpers 18 ist der radiale Ansatz 20 im Bereich des intraossären Anteils 6 im Durchmesser bevorzugt stufenartig erweitert. Die vom krestalen Anteil 4 weg weisende oder apikale Ringfläche 24 des Ansatzes ist im wesentlichen koplanar mit einer Bodenfläche 42 des zentralen Kernimplantatkörpers 18a.

Weiterhin ist dieser radiale Ansatz 20 mit wenigstens einer im Wesentlichen parallel zur Längsachse 26 des Implantatkörpers 18 oder des Dentalschraubimplantats 1 verlaufenden Durchgangsöffnung 28 versehen, welche eine Verbindung zwischen der zum krestalen Anteil 4 weisenden oder koronalen Ringfläche 22 des Ansatzes 20 und der vom krestalen Anteil 4 weg weisenden oder apikalen Ringfläche 24 des Ansatzes 20 herstellt. Die beiden Ringflächen 22 und 24 stellen daher auch Stirnflächen des Ansatzes 20 dar, welche etwa senkrecht zur Längsachse 26 verlaufen. Alternativ könnten die Ringflächen 22 und 24 auch in einem beliebigen spitzen Winkel in Bezug zur Längsachse 26 angeordnet sein.

In dem bestimmungsgemäß in den Kieferknochen 2 eingesetzten Zustand des Dentalschraubimplantats 1 gemäß **Fig.2** ist die zum krestalen Anteil 4 weisende oder i koronale Ringfläche 22 des Ansatzes 20 in Richtung der Längsachse 26 des Implantatkörpers 18 bzw. des Dentalschraubimplantats 1 gesehen von der krestalen Knochenlinie 14 apikal oder subkrestal um den Abstand a beabstandet. Folglich liegt in **Fig.2** die koronale Ringfläche 22 des Ansatzes 20 nach dem Einsetzen des Dentalschraubimplantats 1 in Fig.2 unterhalb der krestalen Knochenlinie 14. Dann ist der gesamte Ansatz 20 intraössär angeordnet.

Bevorzugt ist die zum krestalen Anteil 4 weisende Ringfläche 22 des radialen ringförmigen Ansatzes 20 von der krestalen Knochenlinie 14 um 1 mm bis 3 mm apikal oder subkrestal beabstandet, d.h. der Abstand a beträgt vorzugsweise 1 mm bis 3 mm. Dann ist gewährleistet, dass der Kieferknochen 2 nicht nur von der apikalen Seite sondern auch von der krestalen Seite her in die wenigstens eine Durchgangsöffnung 28 einwachsen kann, wenn das Dentalschraubimplantat 1 in die Sacklochbohrung im Kieferknochen 2 axial eingesetzt worden ist.

Wie insbesondere aus **Fig.3** hervorgeht, weist der radiale ringförmige Ansatz 20 einen hülsenförmigen Körper 30 sowie wenigstens einen diesen hülsenförmigen Körper 30 mit dem restlichen Implantatkörper 18 verbindenden lateralen oder radialen Steg 32 auf. In **Fig.2** ist ein solcher Steg 32 im rechten Halbschnitt sichtbar.

In Umfangsrichtung von **Fig.2** gesehen wird dann eine Durchgangsöffnung 28 zwischen zwei lateralen Stegen 32 und dem hülsenförmigen Körper 30 gebildet. Bevorzugt sind beispielsweise drei solcher Stege 32 und dann drei axiale Durchgangsöffnungen 28 vorhanden. Generell kann das Dentalschraubenimplantat 1 aber eine beliebige Anzahl von Stegen 32 und Durchgangsöffnungen 28 aufweisen. Mithin ist jede beliebige Zahl, Anordnung und Form bzw. jeder beliebige Verlauf einer Durchgangsöffnung 28 denkbar, sofern diese die beiden Ringflächen 22 und 24 miteinander verbinden kann. Im hier nur beispielhaft gezeigten Fall sind die Durchgangsöffnungen 28 vorzugsweise teilkreisringförmig.

Besonders bevorzugt erstreckt sich das Schraubgewinde oder Schlaggewinde 16 in Richtung der Längsachse 26 gesehen über die gesamte Längserstreckung des Ansatzes 20.

Weiterhin kann eine radial äußere Umfangsfläche 34 des Ansatzes 20, an welcher radial außen das Schraubgewinde 16 angeordnet ist bzw. welche dieses trägt, im Längsquerschnitt gesehen einen konischen oder kegeligen Verlauf aufweisen (**Fig.1**), wobei sich der Durchmesser in apikaler Richtung reduziert. Dabei kann der Kegelwinkel α beispielsweise etwa 5 Grad betragen. Vorzugsweise verläuft die gesamte radial äußere Umfangsfläche 34 des Ansatzes 20 konisch. Das Schraubgewinde 16 selbst ist dann in analoger Weise im Längsquerschnitt gesehen konisch ausgebildet. Die äußere Umfangsfläche 34 des Ansatzes 20 bildet dann gewissermaßen den Kerndurchmesser des Schraubgewindes 16.

Wie aus **Fig.2** leicht vorstellbar ist, wird zum Einsetzen des Dentalschraubimplantats 1 zunächst eine axiale Sacklochbohrung in dem Kieferknochen 2 gefertigt, welche gerade so tief ist, dass der intraössäre Anteil 6 gegenüber der krestalen Knochenlinie 14 um den Abstand a versenkt angeordnet ist. Der Durchmesser dieser Sacklochbohrung ist dann beispielsweise kleiner als der Außendurchmesser des Schraubgewindes 16. Dann wird das Dentalschraubimplantat 1 in die Sacklochbohrung eingeschraubt, wobei sich die Gewindegänge des Schraubgewindes 16 bevorzugt selbstschneidend ist das Knochenmaterial 2 eindrehen. In vollständig eingeschraubtem Zustand wird dann sichergestellt, dass die koronale Ringfläche 22 des Ansatzes 20 den Abstand a von der krestalen Knochenlinie 14 aufweist. Mit der Zeit Wächst dann Knochenmaterial des Kieferknochens 2 sowohl von der apikalen Seite als auch von der koronalen Seite her in die Durchgangsöffnungen 28 ein und sorgt nebeh der Schraubverbindung für eine zusätzliche formschlüssige und in axialer Richtung gesehen parallele Verbindung zwischen dem Kieferknochen 2 und dem Dentalschraubimplantat 1. Dieser in den Kieferknochen 2 eingewachsene Zustand des Dentalschraubimplantats ist in **Fig.2** gezeigt.

Gemäß einer Fortbildung kann die zum krestalen Anteil 4 weisende oder koronale Ringfläche 22 des Ansatzes 20 eine umlaufende, vorzugsweise ununterbrochene Ringnut 36 aufweisen. Diese Ringnut 36 kann aber auch in Umfangsrichtung gesehen durch radial verlaufende Stege unterbrochen sein. In diese Ringnut 36 kann dann ebenfalls Kieferknochen 2 von der koronalen Seite her einwachsen. In axialer Richtung gesehen erstreckt sich dann die Ringnut 36 zwischen der zum krestalen Anteil 4 weisenden oder koronalen restlichen Ringfläche 22 des Ansatzes 20 und den zum krestalen Anteil 4 weisenden Stirnflächen der Stege 32. Alternativ kann eine solche Ringnut 36 auch entfallen.

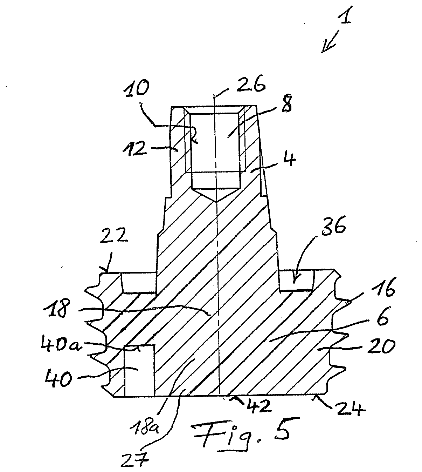

Bei den weiteren, in **Fig.4** und **Fig.5** gezeigten Ausführungsformen sind gleiche oder gleich wirkende Elemente wie in Figuren 1 bis 3 bezeichnet und auch mit denselben Bezugszahlen versehen.

Im Unterschied zur Ausführungsform der Figuren 1 bis 3, sind bei der Ausführungsform von **Fig.4** keine Durchgangsöffnungen 28 vorhanden. Vielmehr ist hier der Ansatz 20 des intraossären Anteils 6 mit wenigstens einer Sacklochöffnung 38 versehen, welche im Wesentlichen parallel zur Längsachse 26 des Implantatkörpers 18 verläuft und in der zum krestalen Anteil weisenden oder koronalen Ringfläche 22 ausgebildet ist. Die wenigstens eine erste Sacklochöffnung 38 stellt eine Öffnung dar, welche einen Boden 38a aufweist. Dabei können eine beliebige Anzahl von ersten Sacklochöffnungen 38 in der zum krestalen Anteil weisenden oder koronalen Ringfläche 22 ausgebildet sein.

Auch kann bei der Ausführungsform von **Fig.4** wie der Ausführungsform der Figuren 1 bis 3 eine umlaufende Ringnut 36 in der zum krestalen Anteil weisenden oder koronalen Ringfläche 22 ausgebildet sein. Eine solche Ringnut 36 kann aber alternativ auch entfallen. Die ersten Sacklochöffnungen 38 können dann beispielsweise analog zur Ausführungsform von **Fig.3** in beliebiger Anzahl und Umfangsabstand zueinander am Umfang des Ansatzes 20 verteilt angeordnet sein. Dann kann Knochenmaterial von der koronalen Seite her in die wenigstens eine erste Sacklochöffnung 38 und falls vorhanden auch in die Ringnut 36 einwachsen.

Auch bei der Ausführungsform von **Fig.5** sind im Unterschied zur Ausführungsform der Figuren 1 bis 3 keine Durchgangsöffnungen 28 vorhanden. Dort ist aber in der vom krestalen Anteil 4 weg weisenden oder apikalen Ringfläche 24 des Ansatzes 20 wenigstens eine zweite Sacklochöffnung 40 ausgebildet, welche ebenfalls einen Boden 40a aufweist. Dabei können eine beliebige Anzahl von zweiten Sacklochöffnungen 40 in der vom krestalen Anteil 4 weg weisenden oder apikalen Ringfläche 24 des Ansatzes 20 ausgebildet sein.

Auch kann in der Ausführungsform von **Fig.5** wie der Ausführungsform der Figuren 1 bis 3 eine umlaufende Ringnut 36 in der zum krestalen Anteil weisenden oder koronalen Ringfläche 22 ausgebildet sein. Eine solche Ringnut 36 kann aber alternativ auch entfallen. Die zweiten Sacklochöffnungen 40 können dann beispielsweise analog zur Ausführungsform von **Fig.3** in beliebiger Form, Anzahl und Umfangsabstand zueinander über den Umfang des Ansatzes 20 verteilt angeordnet sein. Dann kann Knochenmaterial des Kieferknochens von der apikalen Seite her in die wenigstens eine zweite Sacklochöffnung 40 bzw. falls vorhanden auch in die Ringnut 36 einwachsen.

Offenbart ist auch eine hier nicht gezeigte Ausführungsform, welche eine Kombination der Ausführungsformen von **Fig.4** und **Fig.5** darstellt, bei welcher sowohl in der zum krestalen Anteil weisenden oder koronalen Ringfläche 22 des Ansatzes 20 wenigstens eine erste Sacklochöffnung 38 und in der vom krestalen Anteil 4 weg weisenden oder apikalen Ringfläche 24 des Ansatzes 20 wenigstens eine zweite Sacklochöffnung 40 ausgebildet ist. Auch kann bei dieser Ausführungsform eine umlaufende Ringnut 36 in der zum krestalen Anteil weisenden oder koronalen Ringfläche 22 des Ansatzes 20 ausgebildet sein. Eine solche Ringnut 36 kann aber alternativ auch entfallen. Dann kann Knochenmaterial sowohl von der koronalen Seite als auch von der apikalen Seite her in die wenigstens eine erste Sacklochöffnung 38 und falls vorhanden in die Ringnut 36 sowie in die wenigstens eine zweite Sacklochöffnung 40 einwachsen.

Wie bei der Ausführungsform der Figuren 1 bis 3 sind auch bei den weiteren Ausführungsformen radiale Stege 32 zwischen den ersten Sacklochöffnungen 38 bzw. zwischen den zweiten Sacklochöffnungen 40 vorhanden.

Bevorzugt besteht wenigstens der radiale Ansatz 20 des Dentalschraubimplantats 1 aus Titan-Spongosia. Weiterhin bevorzugt ist das gesamte Dentalschraubimplantat 1 ein einstückiger Körper beispielsweise aus Titan-Spongosia.

### BEZUGSZEICHENLISTE

- 1: Dentalschraubimplantat
- 2: Kieferknochen
- 4: krestaler Anteil
- 6: intraössärer Anteil
- 8: Sacklochbohrung
- 10: Innengewinde
- 12: Endabschnitt
- 14: krestale Knochenlinie
- 16: Schraubgewinde
- 18: Implantatkörper
- 18a: Kernimplantatkörper
- 20: Ansatz
- 22: koronale Ringfläche
- 24: apikale Ringfläche
- 26: Längsachse
- 27: apikales Ende
- 28: Durchgangsöffnung
- 30: hülsenförmiger Körper
- 32: Steg
- 34: radial äußere Umfangsfläche
- 36: Ringnut
- 38: erste Sacklochöffnung
- 38a: Boden
- 40: zweite Sacklochöffnung
- 40a: Boden
- 42: Bodenfläche

## Patentansprüche

1. Dentalschraubimplantat (1) zum Einschrauben in einen Kieferknochen (2), welcher eine krestale Knochenlinie (14) im Bereich seines knöchernen Alveolarkamms aufweist, mit
a) einem Implantatkörper (18), welcher einen krestalen Anteil (4) und einen intraossären Anteil (6) aufweist, wobei
b) der krestale Anteil (4) zur Aufnahme einer Zahnprothetik ausgebildet ist, und
c) der intraossäre Anteil (6) mit einem Schraubgewinde oder Schlaggewinde (6) zum Einsetzen in den Kieferknochen (2) versehen ist, wobei
d) im Bereich des intraossären Anteils (6) des Implantatkörpers (18) ein ring- oder hülsenförmiger, vom Schraubgewinde oder Schlaggewinde (6) abweichender und gegenüber einem zentralen Kernimplantatkörper (18a) radial erweiterter Ansatz (20) vorgesehen ist, wobei
e) sich wenigstens der zentrale Kernimplantatkörper (18a) in Richtung einer Längsachse (26) des Dentalschraubimplantats (1) gesehen bis zu einem apikalen Ende (27) des Dentalschraubimplantats (1) erstreckt, und wobei
f) an einer radial äußeren Umfangsfläche (34) des Ansatzes (20) das Schraubgewinde oder Schlaggewinde (6) ausgebildet ist, **dadurch gekennzeichnet, dass** der Ansatz (20)
g1) mit wenigstens einer als Einwachsöffnung für den Kieferknochen (2) vorgesehenen Durchgangsöffnung (28) versehen ist, welche im Wesentlichen parallel zur Längsachse (26) des Implantatkörpers (18) verläuft und eine Verbindung zwischen einer zum krestalen Anteil (3) weisenden oder koronalen Ringfläche (22) des Ansatzes (20) und einer vom krestalen Anteil (4) weg weisenden oder apikalen Ringfläche (24) des Ansatzes (20) herstellt, und/oder
g2) mit wenigstens einer als Einwachsöffnung für den Kieferknochen (2) vorgesehenen Sacklochöffnung (38) versehen ist, welche im Wesentlichen parallel zur Längsachse (26) des Implantatkörpers (18) verläuft und in der zum krestalen Anteil (4) weisenden oder koronalen Ringfläche (22) des Ansatzes (20) ausgebildet ist, wobei
g) in einem bestimmungsgemäß in den Kieferknochen (2) eingesetzten Zustand des Dentalschraubimplantats (1) die zum krestalen Anteil (4) weisende oder koronale Ringfläche (22) des Ansatzes (20) in Richtung der Längsachse (26) des Implantatkörpers (18) gesehen von der krestalen Knochenlinie (14) apikal oder subkrestal beabstandet ist.

2. Dentalschraubimplantat nach Anspruch 1, **dadurch gekennzeichnet, dass** in einem bestimmungsgemäß in den Kieferknochen (2) eingesetzten Zustand die zum krestalen Anteil (4) weisende oder koronale Ringfläche (22) des Ansatzes (20) von der krestalen Knochenlinie (14) um 1 mm bis 3 mm apikal oder subkrestal beabstandet ist.

3. Dentalschraubimplantat nach einem der vorhergehenden Ansprüche, **dadurch gekennzeichnet, dass** der Ansatz (20) einen hülsenförmigen Körper (30) sowie wenigstens einen diesen hülsenförmigen Körper (30) mit dem restlichen Implantatkörper (18) verbindenden lateralen oder radialen Steg (32) aufweist.

4. Dentalschraubimplantat nach einem der vorhergehenden Ansprüche, **dadurch gekennzeichnet, dass** sich das Schraubgewinde oder Schlaggewinde (6) in Richtung der Längsachse (26) des Implantatkörpers (18) gesehen sich über die gesamte Längserstreckung des Ansatzes (20) erstreckt.

5. Dentalschraubimplantat nach einem der vorhergehenden Ansprüche, **dadurch gekennzeichnet, dass** wenigstens der Ansatz (20) aus Titan-Spongosia besteht.

6. Dentalschraubimplantat nach einem der vorhergehenden Ansprüche, **dadurch gekennzeichnet, dass** das Schraubgewinde oder Schlaggewinde (6) selbstschneidend ausgeführt ist.

7. Dentalschraubimplantat nach einem der vorhergehenden Ansprüche, **dadurch gekennzeichnet, dass** eine radial äußere Umfangsfläche (34) des ringförmigen Ansatzes (20) im Querschnitt gesehen einen konischen oder kegeligen Verlauf aufweist, wobei sich der Durchmesser in apikaler Richtung reduziert.

8. Dentalschraubimplantat nach Anspruch 7, **dadurch gekennzeichnet, dass** der Kegelwinkel etwa 5 Grad beträgt.

9. Dentalschraubimplantat nach einem der vorhergehenden Ansprüche, **dadurch gekennzeichnet, dass** der krestale Anteil (4) einen axialen Endabschnitt (12) aufweist, dessen Außendurchmesser sich in koronaler Richtung konisch verjüngt.

10. Dentalschraubimplantat nach einem der vorhergehenden Ansprüche, **dadurch gekennzeichnet, dass** der krestale Anteil (4) eine zentrale Sacklochbohrung (8) mit Innengewinde (10) zur Aufnahme eines Abutments aufweist.

11. Dentalschraubimplantat nach einem der vorhergehenden Ansprüche, **dadurch gekennzeichnet, dass** die zum krestalen Anteil (4) weisende oder koronale Ringfläche (22) des Ansatzes (20) eine umlaufende ununterbrochene oder teilkreisweise ausgebildete Ringnut (36) aufweist.

12. Dentalschraubimplantat nach einem der vorhergehenden Ansprüche, **dadurch gekennzeichnet, dass** die wenigstens eine Durchgangsöffnung (28) und die wenigstens eine Sacklochöffnung (38) in einer Richtung senkrecht zur Längsachse (26) gesehen einen beliebigen Querschnitt aufweisen.

13. Dentalschraubimplantat nach einem der vorhergehenden Ansprüche, **dadurch gekennzeichnet, dass** die wenigstens eine Durchgangsöffnung (28) und die wenigstens eine Sacklochöffnung (38) in einer Richtung senkrecht zur Längsachse (26) gesehen einen der folgenden Querschnitte aufweist: Einen ringförmig vollständig umlaufenden Querschnitt, einen kreisrunden Querschnitt, einen teilkreisringförmigen Querschnitt, einen runden Querschnitt, einen eckigen Querschnitt.

14. Dentalschraubimplantat nach einem der vorhergehenden Ansprüche, **dadurch gekennzeichnet, dass** die vom krestalen Anteil (4) wegweisende oder apikale Ringfläche (24) des Ansatzes (20) im wesentlichen koplanar mit einer Bodenfläche (42) des zentralen Kernimplantatkörpers (18a) ist.

15. Dentalschraubimplantat nach einem der vorhergehenden Ansprüche, **dadurch gekennzeichnet, dass** sich der Ansatz (20) in Richtung der Längsachse (26) gesehen bis zu dem apikalen Ende (27) des Dentalschraubimplantats (1) erstreckt.

## Claims

1. A threaded dental implant (1) for threading into a jaw bone (2) that includes a crestal bone line (14) in a portion of a bony alveolar crest, the threaded dental implant comprising:
a) an implant body (18) that includes a crestal portion (4) and an intraossal portion (6),
b) wherein the crestal portion (4) is configured to receive a dental prosthesis,
c) wherein the intraossal portion (6) is provided with a screw thread or a self-piercing thread for insertion into the jaw bone (2),
d) wherein a radially expanded shoulder (20) is provided in the intraossal portion (6) of the implant body (18) wherein the radially expanded shoulder is annular or sleeve shaped and differs from the screw thread or self-piercing thread and wherein the shoulder is radially expanded relative to a central core implant body (18a),
e) wherein at least the central core implant body (18a) extends along a longitudinal axis (26) of the threaded dental implant (1) to an apex end (27) of the threaded dental implant (1), and
f) wherein the thread or self-piercing thread is arranged at a radially outer circumferential surface (34) of the shoulder (20),
**characterized in that** the shoulder (20),
g1) includes at least one pass through opening (28) that is configured as a grow in opening for the jaw bone (2) wherein the pass through opening extends substantially parallel to the longitudinal axis (26) of the implant body (18) and establishes a connection between a coronal annular surface (22) of the shoulder (20) that is oriented towards the crestal portion (3) and an annular apex surface (24) of the shoulder (20) that is oriented away from the crestal portion (4), and/or
g2) includes a dead hole (38) that is provided as the grow in opening for the jaw bone (2) wherein the dead hole extends essentially parallel to the longitudinal axis (26) of the implant body (18) and is configured in the coronal annular surface (22) of the shoulder (20) that is oriented towards the crestal portion (4),
g3) wherein the coronal annular surface (22) of the shoulder (20) that is oriented towards the crestal portion (4) is offset in a direction of the longitudinal axis (26) of the implant body (18) from the crestal bone line (14) in an apex direction or in a sub-crestal direction in a condition where the threaded dental implant (1) is properly inserted into the jaw bone (2).

2. The threaded dental implant (1) according to claim 1, **characterized in that** the coronal annular surface (22) that is oriented towards the crestal portion (4) is offset from the crestal bone line (14) by 1 mm to 3 mm in an apex direction or in a sub-crestal direction when properly inserted into the jaw bone (2).

3. The threaded dental implant (1) according to one of the preceding claims, **characterized in that** the shoulder (20) includes a sleeve shaped body (30) and at least one lateral or radial bar (32) that connects the sleeve shaped body (30) with the implant body (18).

4. The threaded dental implant (1) according to one of the preceding claims, **characterized in that** the screw thread or self-piercing thread extends in a direction of the longitudinal axis (26) of the implant body (18) over an entire longitudinal extension of the shoulder (20).

5. The threaded dental implant (1) according to one of the preceding claims, **characterized in that** at least the shoulder (20) is made from titanium spongosia.

6. The threaded dental implant (1) according to one of the preceding claims, **characterized in that** the screw thread or self-piercing thread is configured self-cutting.

7. The threaded dental implant (1) according to one of the preceding claims, **characterized in that** a radially outer circumferential surface (34) of the annular shoulder (20) includes a conical or frustum shaped cross section with a diameter that increases in the apex direction.

8. The threaded dental implant (1) according to claim 7, **characterized in that** the cone angle is approximately 5 degrees.

9. The threaded dental implant (1) according to one of the preceding claims, **characterized in that** the crestal portion (4) includes an axial end section (12) with an outer diameter that tapers conically in the coronal direction.

10. The threaded dental implant (1) according to one of the preceding claims, **characterized in that** the crestal portion (4) includes a central dead hole (8) with an inner thread (10) configured to receive an abutment.

11. The threaded dental implant (1) according to one of the preceding claims, **characterized in that** the coronal annular surface (22) of the shoulder (20) that is oriented towards the crestal portion (4) includes a circumferential uninterrupted or partially configured annular groove (36).

12. The threaded dental implant (1) according to one of the preceding claims, **characterized in that** the at least one pass through opening (28) and the at least one dead hole (38) have an arbitrary cross section in a direction orthogonal to the longitudinal axis (26).

13. The threaded dental implant (1) according to one of the preceding claims, **characterized in that** the at least one pass through opening (28) and the at least one dead hole (38) includes one of the subsequent cross sections viewed orthogonal to the longitudinal axis (26): an annular completely circumferential cross section, a circular cross section, a partially circular cross section, a round cross section, a polygonal cross section.

14. The threaded dental implant (1) according to one of the preceding claims, **characterized in that** the annular apex surface (24) of the shoulder (20) that is oriented away from the crestal portion (4) is substantially co-planar with a base surface (42) of the core implant body (18a).

15. The threaded dental implant (1) according to one of the preceding claims, **characterized in that** the shoulder (20) extends in a direction of the longitudinal axis (26) to an apex end (27) of the threaded dental implant.

## Revendications

1. Implant dentaire à visser (1) qui doit être vissé dans un os maxillaire (2) qui présente une ligne osseuse crestale (14) dans la zone de sa cavité alvéolaire osseuse avec
a) un corps d'implant (18) qui présente une portion crestale (4) et une portion intraosseuse (6), cependant
b) que la portion crestale (4) est configurée pour loger une prothèse dentaire et
c) la portion intraosseuse (6) est pourvue d'un filet à visser ou d'un filet à enfoncer (6) à mettre en place dans l'os maxillaire (2), cependant
d) qu'il est prévu, dans la zone de la portion intraosseuse (6) du corps d'implant (18) un appendice (20) en forme d'anneau ou de manchon, qui s'écarte du filet à visser ou du filet à enfoncer (6) et qui est élargi radialement par rapport à un corps d'implant de noyau central (18a), cependant
e) qu'au moins le corps d'implant de noyau central (18a) s'étend jusqu'à une extrémité apicale (27) de l'implant dentaire à visser (1), ceci étant vu en direction d'un axe longitudinal (26) de l'implant dentaire à visser (1) et cependant
f) que le filet à visser ou le filet à enfoncer (6) est formé sur une face périphérique extérieure radialement (34) de l'appendice (20), **caractérisé en ce que** l'appendice (20)
g1) est pourvu d'au moins une ouverture de passage (28), prévue comme ouverture de croissance pour l'os maxillaire (2), qui est substantiellement parallèle à l'axe longitudinal (26) du corps d'implant (18) et qui réalise une liaison entre une face annulaire (22) tournée vers la portion crestale (3) ou une face annulaire coronaire (22) de l'appendice (20) et une face annulaire (24) détournée de la portion crestale (4) ou une face annulaire apicale de l'appendice (20) et/ou
g2) d'un trou borgne (38), prévu comme ouverture de croissance pour l'os maxillaire (2), qui est substantiellement parallèle à l'axe longitudinal (26) du corps d'implant (18) et qui est formée dans la face annulaire (22) tournée vers la portion crestale (4) ou dans la face annulaire coronaire (22) de l'appendice, cependant
g) que, lorsque l'implant dentaire à visser (1) est dans un état mis en place dans l'os maxillaire (2) conformément à l'usage prévu, la face annulaire (22) tournée vers la portion crestale (4) ou la face annulaire coronaire (22) de l'appendice (20) est espacée de la ligne osseuse crestale (14) dans le sens apical ou sous la crête, ceci étant vu en direction de l'axe longitudinal (26) du corps d'implant.

2. Implant dentaire à visser selon la revendication 1, **caractérisé en ce que**, lorsqu'il est dans un état mis en place dans l'os maxillaire (2) conformément à l'usage prévu, la face annulaire (22) tournée vers la portion crestale (4) ou la face annulaire coronaire (22) de l'appendice (20) est espacée de la ligne osseuse crestale (14) dans le sens apical ou sous la crête d'1 mm à 3 mm.

3. Implant dentaire à visser selon l'une des revendications précédentes, **caractérisé en ce que** l'appendice (20) présente un corps en forme de manchon (30) ainsi qu'au moins une entretoise latérale ou radiale (32) qui relie au moins ce corps en forme de manchon (30) au reste du corps d'implant (18).

4. Implant dentaire à visser selon l'une des revendications précédentes, **caractérisé en ce que** le filet à visser ou le filet à enfoncer (6) s'étend dans le sens de l'axe longitudinal (26) du corps d'implant (18), ceci étant vu sur l'ensemble de l'extension longitudinale de l'appendice (20).

5. Implant dentaire à visser selon l'une des revendications précédentes, **caractérisé en ce qu'**au moins l'appendice (20) est constitué en titane et os spongieux.

6. Implant dentaire à visser selon l'une des revendications précédentes, **caractérisé en ce que** le filet à visser ou le filet à enfoncer (6) est configuré en étant autotaraudeur.

7. Implant dentaire à visser selon l'une des revendications précédentes, **caractérisé en ce qu'**une face périphérique extérieure radialement (34) de l'appendice annulaire (20) présente une allure conique ou tronconique, ceci étant vu en section transversale, le diamètre se réduisant dans le sens apical.

8. Implant dentaire à visser selon la revendication 7, **caractérisé en ce que** l'angle de conicité est d'environ 5 degrés.

9. Implant dentaire à visser selon l'une des revendications précédentes, **caractérisé en ce que** la portion crestale présente une section d'extrémité axiale (12) dont le diamètre extérieur s'effile en cône dans le sens coronaire.

10. Implant dentaire à visser selon l'une des revendications précédentes, **caractérisé en ce que** la portion crestale présente un trou borgne central (8) avec un filet intérieur (10) pour loger un pilier.

11. Implant dentaire à visser selon l'une des revendications précédentes, **caractérisé en ce que** la face annulaire (22) tournée vers la portion crestale (4) ou la face annulaire coronaire (22) de l'appendice (20) présente une rainure annulaire (36) ininterrompue périphérique ou configurée à la manière d'une partie de cercle.

12. Implant dentaire à visser selon l'une des revendications précédentes, **caractérisé en ce que** la au moins une ouverture de passage (28) et le au moins un trou borgne (38) présentent une section transversale quelconque, ceci étant vu dans une direction perpendiculaire à l'axe longitudinal (26).

13. Implant dentaire à visser selon l'une des revendications précédentes, **caractérisé en ce que** la au moins une ouverture de passage (28) et le au moins un trou borgne (38) présentent l'une des sections transversales suivantes, ceci étant vu dans une direction perpendiculaire à l'axe longitudinal (26): une section transversale périphérique entièrement annulaire, une section transversale circulaire, une section transversale en forme d'anneau partiel, une section transversale ronde, une section transversale angulaire.

14. Implant dentaire à visser selon l'une des revendications précédentes, **caractérisé en ce que** la face annulaire (24) détournée de la portion crestale (4) ou la face annulaire apicale (24) de l'appendice (20) est substantiellement coplanaire avec une face de fond (42) du corps d'implant de noyau central (18a).

15. Implant dentaire à visser selon l'une des revendications précédentes, **caractérisé en ce que** l'appendice (20) s'étend jusqu'à l'extrémité apicale (27) de l'implant dentaire à visser (1), ceci étant vu en direction de l'axe longitudinal (26).
